(19) Europäisches Patentamt
European Patent Office
Office européen des brevets

(11) **EP 1 217 395 B1**

(12) **EUROPÄISCHE PATENTSCHRIFT**

(45) Veröffentlichungstag und Bekanntmachung des Hinweises auf die Patenterteilung:
**05.05.2010   Patentblatt 2010/18**

(51) Int Cl.:
***G02B 3/04*** *(2006.01)*

(21) Anmeldenummer: **01119097.2**

(22) Anmeldetag: **07.08.2001**

(54) **Verfahren zum Aufbau eines Linsenkörpers**

A method of manufacturing a lens body

Procédé de fabrication de lentille

(84) Benannte Vertragsstaaten:
**DE FR GB**

(30) Priorität: **07.08.2000   DE 20013777 U**

(43) Veröffentlichungstag der Anmeldung:
**26.06.2002   Patentblatt 2002/26**

(73) Patentinhaber: **Deusser, Alexander**
**64291 Darmstadt (DE)**

(72) Erfinder: **Deusser, Alexander**
**64291 Darmstadt (DE)**

(56) Entgegenhaltungen:
EP-A- 0 721 113     WO-A1-02/41309
US-A- 1 507 212     US-A- 2 388 119
US-A- 3 508 811     US-A- 4 592 627
US-A- 4 904 062

• PATENT ABSTRACTS OF JAPAN vol. 009, no. 276 (P-402), 2. November 1985 (1985-11-02) & JP 60 121412 A (KONISHIROKU SHASHIN KOGYO KK), 28. Juni 1985 (1985-06-28)

**Beschreibung**

Die Erfindung betrifft einen Linsenkörper in einem Gerät, Apparat oder Gegenstand aus einem lichtdurchlässigen Stoff für den Bereich der Optik.

Linsen, die dem Stand der Technik entsprechen, haben u.a. Kugeloberflächen als Begrenzung zum umgebenden optischen Medium, z.B. Luft.

Diese Kugeloberflächen haben aber den Nachteil, daß bei ihnen Abbildungsfehler auftreten, wie z.B eine sphärische Aberration oder ein Astigmatismus. Der Grund dafür ist, dass bei der mathematischen Beschreibung von optischen Abbildungen idealisierend vorausgesetzt wird, dass nur achsennahe Strahlen an der Abbildung beteiligt sind. Treffen die Lichtstrahlen jedoch unter einem großen Abstand von der optischen Achse die Linsenoberfläche, dann ist diese Abbildung mit Fehlern behaftet. Lt. Stohrer, Physik für Ingenieure, Seite 426, VDI Verlag Düsseldorf 1989, 2.Als Auflage sind zum Beheben der Abbildungsfehler Linsensysteme erforderlich, welche aber eine vollkommene Korrektur aller Abbildungsfehler nicht ermöglichen.

Der Stand der Technik offenbart verschiedene Linsenkörper mit asphärischen Rotationsflächen um die Abbildungsfehler der Linsen mit Kugeloberflächen, wie z.B. die sphärische Aberration, Astigmatismus, und Koma, zu beheben.

Die US-Patentschrift US-1 507 212 A verwendet als Oberfläche ein Rotationsellipsoid. Eine zweite Oberfläche ist in Abhängigkeit von der ersten Oberfläche definiert und es werden eine gekrümmte Vorder- und Rückseite der Linsenoberfläche verwendet.

Im EP-0721113 A wird ebenfalls die Rotationsfläche einer Ellipse verwendet.

Die US-3508811 A verwendet eine Oberfläche, deren Schnitt mit einer log-cos-Kurve übereinstimmt und eine gekrümmte Vorder- und Rückseite aufweist.

Eine weitere US-Schrift 4904062 A beschreibt die Form einer asphärischen Linsenoberfläche Diese Linsenoberfläche hat ein ovales (hühnereiförmiges) Profil mit ebenfalls, wie in den vorgenannten Dokumenten, eine gekrümmte Vorder- und Rückseite.

In einer japanischen Veröffentlichung JP- 60121412 A sind die Linsenoberflächen kugelförmig und elliptisch gefertigt. Auch in der US-Schrift 2388119 A sind in einem Teil der Ansprüche sphärischen Oberflächen (Kugeloberflächen) in Verbindung mit einer Blende beschrieben, so dass eine gekrümmte Vorder- und Rückseite in Anwendung kommt.

Die Patentschrift US- 4592627 A erklärt anhand einer mathematischen Formel ein Polynom 6-ter Ordnung, welches achsensymmetrisch gefertigt ist.

Der Erfindung liegt die Aufgabe zugrunde, ein vereinfachendes Verfahren zum Aufbau eines idealen Linsenkörpers zu schaffen.

Die Aufgabe wird durch kennzeichnenden Merkmale der Patentansprüche und deren Zusammenwirken gelöst.

Hervorzuheben an der erfindungsgemäßen Lösung ist, eine spezielle Linsenoberfläche zu schaffen, die in der Lage ist, einen ausgedehnten Lichtstrahl, der sich parallel zur optischen Achse ausbreitet und dabei auf die Linsenoberfläche auftrifft, so zu brechen, dass sich alle Lichtstrahlen in einem Punkt schneiden. Dabei ist es unerheblich, ob es sich bei diesem Punkt um einen Brennpunkt oder einem Zerstreuungspunkt handelt.

Der Radius der Linse darf jedoch für eine bestimmte Linsenoberfläche eine bestimmte maximale obere Grenze nicht überschreiten.

Sind zwei Linsenoberflächen der erfindungsgemäßen Lösung an einem Linsenkörper vorhanden, so richtet sich der Radius des Linsenkörpers stets nach dem kleinsten Radius bei unterschiedlich vorhandenen Linsenoberflächen.

Der ideale Linsenkörper hat den Vorteil, daß er einfallendes Licht ohne Abbildungsfehler in einem Brennpunkt bündeln kann oder Licht so streuen kann, als käme es aus einem virtuellen Brennpunkt bzw. Zerstreuungspunkt. Außer den eingangs benannten Anwendungen findet dieser Linsenkörper in Fotoapparaten, astronomischen Fernrohren oder in Laseroptiken seinen Einsatz.

Anhand eines Ausführungsbeispiels soll die erfindungsgemäße Lösung näher beschrieben werden. Hierbei zeigen

Fig. 1     eine plankonvexe Linse des Linsenkörpers, deren Oberfläche eine Rotationsfläche aufweist
Fig. 2     eine bikonvexe Linse mit zwei verschiedenen großen Brennweiten
Fig. 3     eine plankonkave Linse, deren Oberfläche eine Rotationsfläche aufweist
Fig. 4     eine Kombination unterschiedlicher Linsenoberflächen in einem Linsenkörper

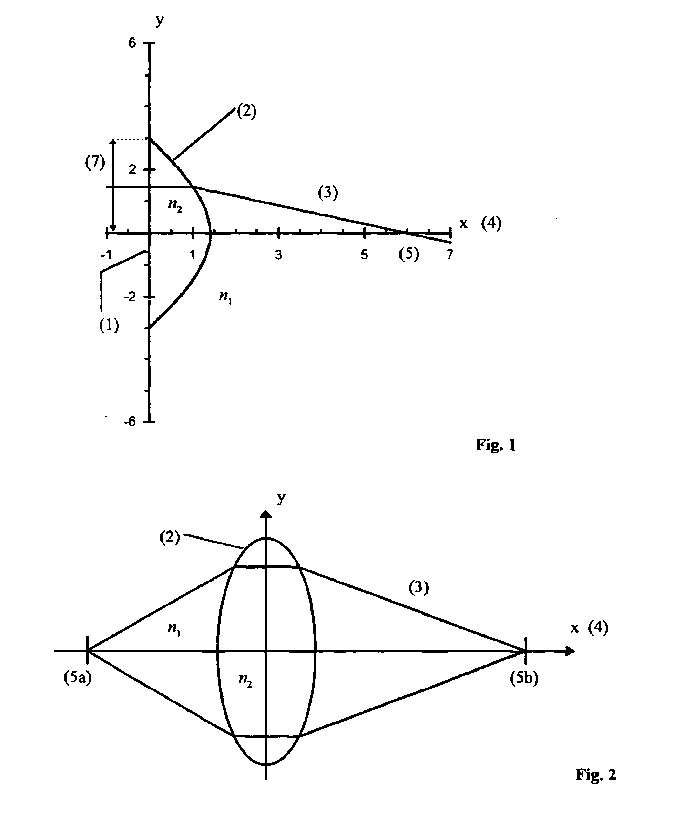

Gem. Figur 1 ist dargestellt, wie der Lichtstrahl 3 von links unter einem rechten Winkel auf die planare Oberfläche 1 des Linsenkörpers trifft, dann den Linsenkörper mit dem Brechungsindex $n_2$ durchläuft und anschließend an der Rotationsfläche 2 zum Brennpunkt 5 hin gebrochen wird.

Figur 2 zeigt die bikonvexe Linse, die Licht aus dem Brennpunkt 5a kommend umlenkt und im Brennpunkt 5b wieder bündelt.

Trifft ein Lichtstrahl 3 unter einem rechten Winkel auf die planare Oberfläche 1 des Linsenkörpers mit dem

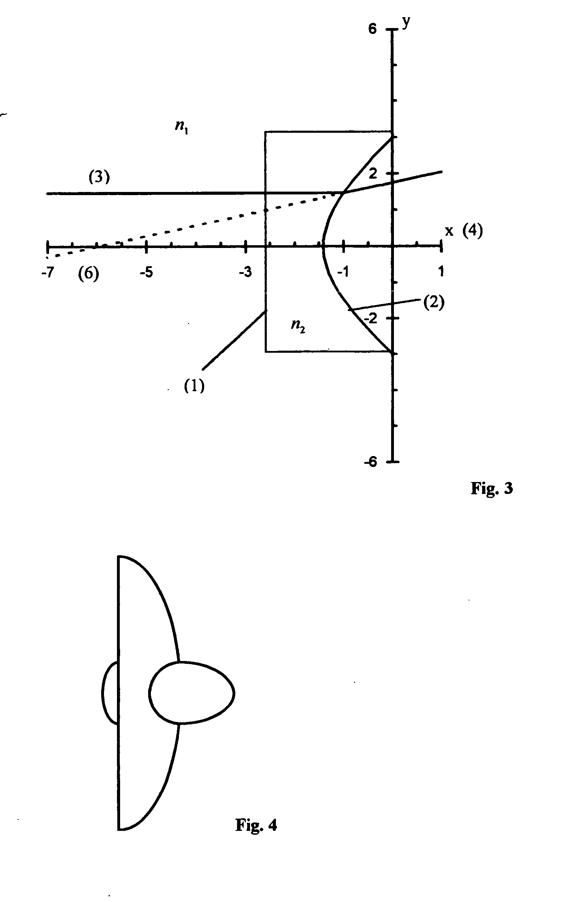

Brechungsindex $n_2$, dann wird der Lichtstrahl 3 an der Rotationsfläche 2 gebrochen. Wenn man die Bahn des gebrochenen Lichtstrahls 3 zurückverfolgt, dann verhält er sich so, als ob er aus dem Zerstreuungspunkt 6 käme. (Figur 3)

In Figur 4 weist der Linsenkörper eine Kombination von unterschiedlichen Linsenoberflächen auf. Die Radien der einzelnen Linsenoberflächen sind dabei entsprechend zu berücksichtigen.

Desweitern soll der Aufbau des Linsenkörpers mit unterschiedlichen Linsenoberflächen anhand von

$$y = \sqrt{a_0 + a_1 \cdot x + a_2 \cdot x^2}$$

dabei bedeutet:

$$a_0 = R^2$$

$$a_1 = 2 \cdot (f - n \cdot \sqrt{R^2 + f^2}) \cdot \zeta$$

$$a_2 = n^2 - 1$$

mit:

R   = Radius des Linsenkörpers
f   = Brennweite der Linse, wobei immer f>0 ist; auch für Zerstreuungslinsen.

$n = \frac{n_2}{n_1}$ dabei ist:

$n_2$ = Brechungsindex des Linsenkörpers und
$n_1$ = Brechungsindex des umgebenden optischen Mediums

$$\zeta = \begin{pmatrix} +1 : & \text{falls die Linsenoberfläche sammelnd ist} \\ -1 : & \text{falls die Linsenoberfläche zerstreuend ist} \end{pmatrix}$$

x = Koordinate in Richtung der optischen Achse.
y = Abstand senkrecht zur optischen Achse nachgewiesen werden.

Somit ist die Fertigung einer idealen Linsenoberfläche hierbei eine Rotationsfläche um die optische Achse. Somit begründet sich auch, dass der Radius eines Linsenkörpers nicht größer zu fertigen ist, als ein für planare Linsenoberflächen gefertigter maximaler Radius

$$R_{\max} = \sqrt{f^2(n^2 - 1)}.$$

Für Linsenkörper, deren Vorder- und Rückseite der Linsenoberfläche in unterschiedlichen Brennweiten $f_1;f_2$ zu fertigen ist, ist der maximale Radius

$$R_{\max} = \min\left[ \sqrt{f_1^2(n^2 - 1)}, \sqrt{f_2^2(n^2 - 1)} \right].$$

Zusätzlich zu den im Ausführungsbeispiel bereits angegeben Bezugszeichen 1 bis 3 (planare Oberfläche; Rotationsfläche; Lichtstrahl) sollen die in der nachfolgende Legende aufgeführten Bezugszeichen den funktionellen Zusammenhang der erfindungsgemäßen Lösung verdeutlichen

4   optische Achse/ x-Achse
5   Brennpunkt bei der Brennweite f
5a  Brennpunkt bei der Brennweite $f_1$
5b  Brennpunkt bei der Brennweite $f_2$
6   Zerstreuungspunkt bei der Brenneweite -f
7   Radius.

**Patentansprüche**

1. Verfahren zum Aufbau eines plankonvexen Linsenkörpers dessen eine Oberfläche (1) eben ist und dessen zweite Oberfläche (2) eine Rotationsfläche um die optische Achse ist **dadurch gekennzeichnet, dass** die Rotationsfläche (2) als $y = \sqrt{a_0 + a_1 \cdot x + a_2 \cdot x^2}$ mit den Koeffizienten $a_0 = R^2$, $a_1 = 2 \cdot \left( f - n \cdot \sqrt{R^2 + f^2} \right)$ und $a_2 = n^2 - 1$

   berechnet wird, wobei
   R (7) der Radius des Linsenkörpers ist;
   f (5) die Brennweite des Linsenkörpers ist, wobei immer f>0 ist;

   $n = \dfrac{n_2}{n_1}$, wobei $n_2$ der Brechungsindex des Linsenkörpers und $n_1$ der

   Brechungsindex des umgebenden optischen Mediums sind;
   x die Koordinate in Richtung der optischen Achse und y der Abstand senkrecht zur optischen Achse sind.

2. Verfahren zum Aufbau eines plankonkaven Linsenkörpers dessen eine Oberfläche (1) eben ist und dessen zweite Oberfläche (2) eine Rotationsfläche um die optische Achse ist **dadurch gekennzeichnet, dass** die Rotationsfläche (2) als

   $y = \sqrt{a_0 - a_1 \cdot x + a_2 \cdot x^2}$ mit den Koeffizienten $a_0 = R^2$,

   $a_1 = 2 \cdot \left( f - n \cdot \sqrt{R^2 + f^2} \right)$ und $a_2 = n^2 - 1$ berechnet wird, wobei

   R (7) der Radius des Linsenkörpers ist;
   f (5) die Brennweite des Linsenkörpers ist, wobei immer f>0 ist;

   $n = \dfrac{n_2}{n_1}$, wobei $n_2$ der Brechungsindex des Linsenkörpers und $n_1$ der

   Brechungsindex des umgebenden optischen Mediums sind;
   x die Koordinate in Richtung der optischen Achse und y der Abstand senkrecht zur optischen Achse sind.

3. Verfahren zum Aufbau eines Linsenkörpers nach Anspruch einem der vorangegangenen Ansprüche, **gekennzeichnet dadurch, dass** der Radius (7) in Abhängigkeit vom umgebenden optischen Medium ($n_1$), vom Medium der Linse ($n_2$) selbst und von der Brennweite dieser sammelnden und/oder zerstreuenden einzigen Rotationsoberfläche (2) der Linse zu fertigen ist.

4. Verfahren zum Aufbau eines Linsenkörpers nach einem der vorangegangenen Ansprüche 1 bis 3, **gekennzeichnet dadurch, dass** der Radius (7) des einzelnen Linsenkörpers abhängig vom Abstand des vorbestimmten Brennpunktes (5) und/oder Zerstreuungspunktes (6) der Rotationsoberfläche (2) der Linse ist.

5. Verfahren zum Aufbau eines Linsenkörpers, mit 2 Rotationsflächen, **gekennzeichnet dadurch dass** die Vorderseite des Linsenkörpers nach Anspruch 1 oder Anspruch 2 und die Rückseite des Linsenkörpers nach Anspruch 1 oder Anspruch 2 mit unterschiedlichen Brennweiten (5a, 5b) zu fertigen ist, ist der maximale Radius

$$\dot{R}_{max} = \min \left[ \sqrt{f_1^2 (n^2 - 1)}, \sqrt{f_2^2 (n^2 - 1)} \right]$$

**Claims**

1. Method to build a plano-convex lens with one surface (1) of the lens being even and the other surface representing a surface of revolution (2) around the optical axis and the lens design **being distinguished by the fact that** the surface of revolution (2) is calculated as $y = \sqrt{a_0 + a_1 \cdot x + a_2 \cdot x^2}$ with the coefficients $a_0 = R^2$, $a_1 = 2 \cdot \left( f - n \cdot \sqrt{R^2 + f^2} \right)$ and $a_2 = n^2 - 1$, and with R (7) being the radius of the lens; f (5) is the focal distance of the lens, with f always >0;

   $n = \dfrac{n_2}{n_1}$, with $n_2$ being the refractive index of the lens and $n_1$ being the refractive index of the surrounding optical medium;
   x is the coordinate towards the optical axis, and y is the vertical distance to the optical axis.

2. Method to build a plano-concave lens with one surface (1) of the lens being even and the other surface (2) of the lens representing a surface of revolution around the optical axis and the lens design **being distinguished by the fact that** the surface of revolution (2) is calculated as $y = \sqrt{a_0 - a_1 \cdot x + a_2 \cdot x^2}$ with the coefficients $a_0 = R^2$, $a_1 = 2 \cdot \left( f - n \cdot \sqrt{R^2 + f^2} \right)$ and $a_2 = n^2 - 1$, and with R (7) being the radius of the lens; f (5) is the focal distance of the lens, with f always >0;

   $n = \dfrac{n_2}{n_1}$, with $n_2$ being the refractive index of the lens and $n_1$ being the refractive index of the surrounding optical medium;
   x is the coordinate towards the optical axis, and y is the vertical distance to the optical axis.

3. Method to build a lens in compliance with any of the above stated claims, **being distinguished by the fact that** the radius (7) has to be produced subject to the surrounding optical medium ($n_1$), to the lens medium ($n_2$) itself, and to the focal distance of this collecting and/or dispersing single surface of revolution (2) of the lens.

4. Method to build a lens in compliance with any of the above stated claims 1 to 3, **being distinguished by the fact that** the radius (7) of the single lens depends on the distance of the pre-determined focal point (5) and/or of the diverging point (6) of the surface of revolution (2) of the lens.

5. Method to build a lens with 2 surfaces of revolution, **being distinguished by the fact that** the front side of the lens in compliance with Claim 1 or Claim 2 above and the reverse side of the lens in compliance with Claim 1 or Claim 2 above has to be produced featuring different focal distances (5a, 5b), with the maximum radius

   $$R_{\max} = \min \left[ \sqrt{f_1^2 (n^2 - 1)}, \sqrt{f_2^2 (n^2 - 1)} \right].$$

**Revendications**

1. Procédé de réalisation d'un corps de lentille plan-convexe dont une surface (1) est plan et dont la deuxième surface est une surface de rotation (2) autour de l'axe optique, **caractérisé en ce que** la surface de rotation (2) est calculée comme $y = \sqrt{a_0 + a_1 \cdot x + a_2 \cdot x^2}$ avec les coefficients $a_0 = R^2$,

$a_1 = 2 \cdot \left( f - n \cdot \sqrt{R^2 + f^2} \right)$ et $a_2 = n^2 - 1$, où

R (7) est le radius du corps de lentille;

f (5) est la focale du corps de lentille, où f est toujours > 0;

$n = \dfrac{n_2}{n_1}$ , où $n_2$ est l'indice de réfraction du corps de lentille et $n_1$ est l'indice de

réfraction du milieu optique entourant;

x est la coordonnée en direction de l'axe optique et y est la distance perpendiculaire à l'axe optique.

2.  Procédé de réalisation d'un corps de lentille plan-concave dont une surface (1) est plan et dont la deuxième surface est une surface de rotation (2) autour de l'axe optique, **caractérisé en ce que** la surface de rotation (2) est calculée comme $y = \sqrt{a_0 - a_1 \cdot x + a_2 \cdot x^2}$ avec le coefficient $a_0 = R^2$, $a_1 = 2 \cdot \left( f - n \cdot \sqrt{R^2 + f^2} \right)$ et $a_2 = n^2 - 1$, où

R (7) est le radius du corps de lentille;

f (5) est la focale du corps de lentille, où f est toujours > 0;

$n = \dfrac{n_2}{n_1}$ , où $n_2$ est l'indice de réfraction du corps de lentille et $n_1$ est l'indice de

réfraction du milieu optique entourant;

x est la coordonnée en direction de l'axe optique et y est la distance perpendiculaire à l'axe optique.

3.  Procédé de réalisation d'un corps de lentille selon l'une des revendications précédentes, **caractérisé en ce que** le radius (7) est à réaliser en fonction du milieu optique entourant ($n_1$), du milieu de la lentille ($n_2$) lui-même et de la focale de cette surface de rotation (2) unique convergent et/ou divergent de la lentille.

4.  Procédé de réalisation d'un corps de lentille selon l'une des revendications précédentes 1 à 3, **caractérisé en ce que** le radius (7) du corps de lentille individuel dépend de la distance du foyer (5) et/ou du point de divergence (6) prédéterminés de la surface de rotation (2) de la lentille.

5.  Procédé de réalisation d'un corps de lentille à 2 surfaces de rotation, **caractérisé en ce que** la face avant du corps de lentille est à réaliser selon la revendication 1 ou la revendication 2, et la face arrière du corps de lentille selon la revendication 1 ou la revendication 2 avec différentes focales (5a, 5b), où le radius maximum est

$R_{max} = \min\left[ \sqrt{f_1^2 (n^2 - 1)}, \sqrt{f_2^2 (n^2 - 1)} \right]$ .

**Fig. 1**

**Fig. 2**

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 1507212 A
- EP 0721113 A
- US 3508811 A
- JP 60121412 A
- US SCHRIFT2388119 A
- US 4592627 A

**In der Beschreibung aufgeführte Nicht-Patentliteratur**

- Fehlern behaftet. Lt. Stohrer. VDI Verlag Düsseldorf, 1989, 426